# EUROPÄISCHE PATENTSCHRIFT

(11) **EP 1 492 384 B1**
(45) Veröffentlichungstag und Bekanntmachung des Hinweises auf die Patenterteilung: **26.09.2007**
(21) Anmeldenummer: 04016205.9
(22) Anmeldetag: 09.06.1998
(51) Int. Cl.: H05B 3/12, H05B 3/22, H05B 1/02, B60H 1/22

(54) **Elektrische Heizeinrichtung, insbesondere für ein Kraftfahrzeug**
Electrical heating device, especially for motor vehicles
Dispositif de chauffage électrique, utilisé en particulier pour des véhicules

(30) Priorität: 02.09.1997 DE 19738318
(43) Veröffentlichungstag der Anmeldung: 29.12.2004
(62) Teilanmeldung aus: 98110528.1
(73) Patentinhaber: Behr GmbH & Co. KG, 70469 Stuttgart (DE)
(72) Erfinder: Ade, Uwe, 70378 Stuttgart (DE); Böhlendorf, Alexander, Dipl.-Ing., 71032 Böblingen (DE); Dieksander, Wolfgang, 70794 Filderstadt (DE); Kleinstück, Lutz, Dipl.-Ing., 65428 Rüsselsheim (DE); Lochmahr, Karl, Dipl.-Ing. (FH), 71665 Vaihingen (DE); Mann, Andreas, 71254 Ditzingen (DE); Pfirsching, Thomas K.M., Dipl.-Ing., 68647 Wattenheim (DE); Weber, Kurt, 70736 Fellbach-Schmieden (DE)
(74) Vertreter: Wallinger, Michael

(56) Entgegenhaltungen:
- EP-A- 0 725 557
- EP-A- 0 840 534
- US-A- 4 358 664
- US-A- 5 665 261

## Beschreibung

Die Erfindung betrifft eine elektrische Heizeinrichtung, insbesondere für ein Kraftfahrzeug.

Die Beheizung des Fahrzeuginnenraums bei Kraftfahrzeugen erfolgt üblicherweise mittels des Kühlwassers des Antriebsaggregates, so daß die in der Brennkraftmaschine entstehende Wärme über einen Wärmetauscher bedarfsweise an die in den Fahrzeuginnenraum strömende Luft abgegeben wird. Diese Wärme steht jedoch erst nach einer bestimmten Betriebsdauer zur Verfügung, so daß insbesondere in der kalten Jahreszeit das Wirksamwerden der Heizung als unzureichend empfunden wird. Auch durch die Entwicklung neuer, verbrauchsoptimierter Motoren, in denen weniger Wärmeenergie anfällt und über das Kühlwasser abgeführt wird, steht zur Fahrzeugheizung eine geringere Wärmeenergie zur Verfügung, die bei extrem niedrigen Außentemperaturen keineswegs zur Fahrzeugheizung ausreicht und die auch bei normalem Heizungsbedarf erst bei erheblicher zeitlicher Verzögerung zu behaglichen Innenraumtemperaturen führt. Gleiches gilt für die Beheizung von Elektro-Fahrzeugen.

Aus den vorstehenden Gründen wurden bereits Zusatzheizungen vorgeschlagen, die in den Luftführungskanal in Richtung der Luftströmung hinter dem Wärmetauscher eingesetzt werden und die Wärme an die in den Fahrzeuginnenraum strömende Luft abgeben. Die Anordnung einer Zusatzheizung zwischen einem Wärmetauscher einer Fahrzeugheizungsanlage und der Fahrzeugkabine ist beispielsweise in dem Aufsatz von Burk, Krauss, Dr. Löhle "Integrales Klimasystem für Elektroautomobile", ATZ Automobiltechnische Zeitschrift, 11/1992, beschrieben.

Es wurden bereits verschiedene Zusatzheizsysteme entwickelt. So enthält beispielsweise ein von der Audi AG hergestelltes Fahrzeug mit der Bezeichnung "A6" eine elektrische Zusatzheizung mit mehreren zu einem Heizblock zusammengesetzten Heizelementen, wobei der Heizblock in einem Rahmen gehalten ist. Einzelne oder Gruppen von Heizelementen können separat einund ausgeschaltet werden. Da bei hohen Heizleistungen aufgrund der niedrigen Bordspannung ein hoher Strom geschaltet werden muß, werden zum Schalten Schaltrelais benutzt. In dem Fahrzeug "Audi A6" sind zwei derartige Relais vorgesehen, so daß die Heizeinrichtung in drei Leistungstufen arbeiten kann.

Nachteilig daran ist, daß jedes separat schaltbare Heizelement bzw. jede separat schaltbare Heizelementgruppe mit einem Relais über jeweils eine elektrische Leitung verbunden sein muß, wodurch ein großer Verkabelungsaufwand notwendig ist. Desweiteren muß jede Leitung einzeln abgesichert werden. Weiter beanspruchen die Schaltrelais einen gewissen Bauraum. Weiter nachteilig ist, daß die Ansteuerung der Relais von einer Ansteuereinrichtung erfolgt, die wiederum an einer anderen Stelle im Kraftfahrzeug, beispielsweise in der Motorelektronik, im Bordcomputer oder in der Elektronik eines Bediengeräts einer Heizungs- oder Klimaanlage, angeordnet ist. Dadurch wird der Verkabelungsaufwand weiter erhöht. Mit dieser bekannten Heizeinrichtung sind nur drei Heizleistungsstufen schaltbar. Da die Heizleistung in nur drei Stufen schaltbar ist, kann die Heizleistung nur unzureichend an die vom Bordnetz momentan maximal zur Verfügung stehende elektrische Leistung angepasst werden.

Die EP 0 840 534 A1 offenbart ein Heiz-Modul mit einen Träger beheizenden Schicht-Heizwiderständen und mit einer elektronischen Schaltung zu deren Steuerung.

Ausgehend von diesem Stand der Technik ist es Aufgabe der Erfindung, eine verbesserte, elektrische Heizeinrichtung bereitzustellen, mit der die vorgenannten Nachteile vermieden werden.

Diese Aufgabe wird erfindungsgemäß gelöst durch eine Heizeinrichtung mit den Merkmalen des Anspruchs 1.

Erfindungsgemäß bildet die Steuervorrichtung mit dem in dem Rahmen gehaltenen Heizblock eine bauliche Einheit. Dadurch kann sämtlicher Verkabelungsaufwand zwischen der Steuervorrichtung und dem Heizblock entfallen. Gleichzeitig entfällt damit auch die Absicherungen einzelner Leitungen durch Sicherungen. Es wird lediglich nur noch eine Sicherung in der gemeinsamen Spannungszuleitung zu der elektrischen Heizeinrichgung benötigt.

Wenn erfindungsgemäß die Steuervorrichtung einen Teil der elektrischen Heizeinrichtung bildet, werden die Heizelemente oder Heizelementgruppen über einzelne elektronische Schalter angesteuert. Die ansonsten üblichen Schaltrelais können dadurch entfallen, wodurch Bauraum, insbesondere außerhalb einer die erfindungsgemäße Heizeinrichtung aufweisenden Heizungs- oder Klimaanlage, eingespart wird. Desweiteren können erheblich mehr Heizeelemente oder Heizelementgruppen separat angesteuert werden, da mehr elektronische Schalter aufgrund ihres geringen Platzbedarfs in der Leistungselektronik untergebracht werden können als Schaltrelais Platz fänden. Die erfindungsgemäße Heizeinrichtung ist daher besser ansteuerbar und kann auf eine erheblich größere Anzahl von Leistungsstufen geregelt werden. Dadurch ist auch die einschaltbare Heizleistung nahe an die vom Bordnetz maximal zur Verfügung stehende Leistung anpaßbar.

Die Steuervorrichtung ist bevorzugt aufgeteilt in eine Ansteuerlogik und eine Leistungselektronik, wobei die Leistungselektronik die elektronischen Schalter enthält.

Bevorzugt ist die Steuervorrichtung an ein Datenbussystem, beispielsweise CAN, oder eine serielle Schnittstelle anschließbar, über das oder die entsprechende Steuerbefehle an die Ansteuerlogik der Steuervorrichtung geleitet werden.

Wenn die Ruheströme der Leistungselektronik kleiner etwa 1 mA sind, kann die erfindungsgemäße Heizeinrichtung ohne zusätzliche Trennrelais direkt an die Fahrzeugbatterie angeschloßen werden.

Bevorzugt weisen insbesondere die elektronischen Schalter Kühlkörper auf, die in der Steuervorrichtung derart angeordnet sind, daß sie von dem zu erwärmenden Luftstrom, der die Heizeinrichtung durchströmt, beaufschlagbar sind, so daß der Luftstrom nicht nur aufgewärmt wird, sondern gleichzeitig zur Kühlung der elektronischen Schalter und damit der Steuervorrichtung benutzt werden kann. Somit wird auch die Verlustleistung der Steuervorrichtung dem zu erwärmenden Luftstrom zugeführt.

Um die Steuervorrichtung auswechseln zu können, ist sie bevorzugt über elektrische Anschlüsse an den Heizblock ansteckbar. Damit ist eine modulartig aufgebaute Einheit aus Steuervorrichtung und dem in dem Rahmen gehaltenen gehaltenen Heizblock gebildet.

Erfindungsgemäß ist die Steuervorrichtung seitlich an dem Rahmen angeordnet, so daß der Haupteil des Luftstroms die Heizeinrichtung durchsetzen kann und nur ein Randteil des Luftstroms die Steuervorrichtung zur Kühlung anströmt.

Bevorzugt besteht der Rahmen aus Kunststoff und weist Führungen auf, in denen die Steuervorrichtung zum Ein- bzw. Ausbau führbar ist, so daß beispielsweise das Anstecken der Steuervorrichtung an den Heizblock erleichtert wird und die Steuervorrichtung an dem Rahmen gehalten ist.

In einer alternativen Ausführungsform der Erfindung kann der Rahmen aus Metall bestehen und die Steuervorrichtung in dem Rahmen integriert sein.

Vorteilhafterweise kann die Steuervorrichtung dazu genutzt werden, die elektrischen Heizelemente und/oder die Steuervorrichtung selbst zu überwachen, wobei bevorzugt die Überwachungsdaten über das Datenbussystem oder die serielle Schnittstelle zur Verfügung stehen.

Weiter ist die Steuervorrichtung nutzbar, um die elektrischen Heizelemente und/oder die Steuervorrichtung selbst vor elektrischer und/oder thermischer Überlastung zu schützen.

Zum Schutz vor Korrosion und mechanischer Überbelastung sind elektronische und/oder elektromechanische Bauelemente der Steuervorrichtung zumindest teilweise in eine dauerelastische Vergußmasse eingegossen.

Im folgenden wird die Erfindung anhand eines Ausführungsbeispiels unter Bezugnahme auf die Zeichnung im einzelnen erläutert.

In der Zeichnung zeigen:
- **Fig. 1**: eine perspektivische Darstellung eines Ausführungsbeispiels der erfindungsgemäßen Heizeinrichtung;
- **Fig. 2**: eine schematische Darstellung der erfindungsgemäßen Heizeinrichtung in stromabwärts eines Wärmetauschers gelegener Einbauposition;
- **Fig. 3**: ein schematisches Schaltbild der Heizeinrichtung;

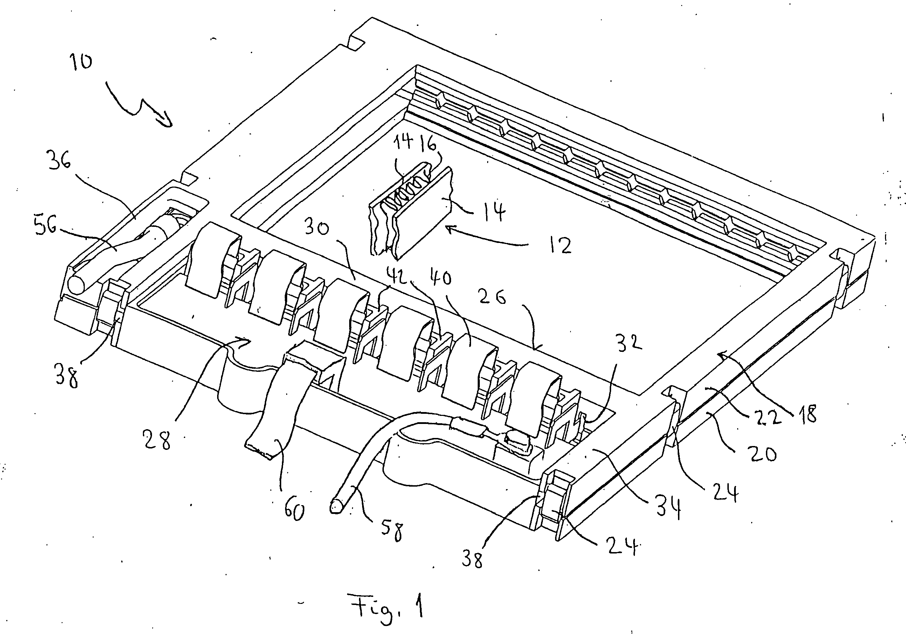

Eine in der Zeichnung dargestellte, erfindungsgemäße Heizeinrichtung 10 weist einen - nicht näher dargestellten und lediglich bei der Bezugsziffer 12 abschnittsweise angedeuteten - Heizblock auf, der aus einzelnen Heizelementen 14 und zwischen den Heizelementen 14 angeordneten Wellrippen 16 gebildet ist. Derartige Heizelemente 14 sind beispielsweise in der DE 44 36 613 beschrieben und bestehen dort bevorzugt aus zwischen zwei Blechen gehaltenen PTC-Heizelementen. Alternativ könnten die Heizelemente auch als elektrische Heizwiderstände ausgebildete Wellrippen ausgebildet sein. Der Heizblock 12 ist in einem Rahmen 18 gehalten, der bevorzugt aus Kunststoff oder Metall besteht. In dem in **Fig. 1** dargestellten Ausführungsbeispiel besteht der Rahmen 18 aus zwei Rahmenhälften 20 und 22, die mit Klammern 24 zusammengehalten sind. Die einzelnen Heizelemente 14 des Heizblocks 12 sind gegeneinander und gegenüber dem Rahmen 18 elektrisch isoliert.

An einer Schmalseite 26 des Heizblocks 12 ist eine Steuervorrichtung 28 vorgesehen, die zusammen mit dem in dem Rahmen 18 gehaltenen Heizblock 12 eine bauliche Einheit bildet, wie in **Fig. 1** dargestellt. Die Steuervorrichtung 28 ist dabei bevorzugt als Steckmodul ausgebildet und unmittelbar an einen vorderen Rahmenschenkel 30, der nicht dargestellte elektrische Anschlüsse für die Heizelelemente 14 aufweist, ansteckbar. In einer einfachen Ausgestaltung der Erfindung sind die elektrischen Anschlüsse durch Ausnehmungen 32 in dem vorderen Rahmenschenkel 30 hindurchgeführt, so daß die Steuervorrichtung 28 im wesentlichen unmittelbar an die Heizelemente 14 des Heizblocks 12 angesteckt ist. Zum erleichterten Einstecken und Abziehen der Steuervorrichtung 28 stehen parallel verlaufende Rahmenschenkel 34 und 36 über den vorderen Rahmenschenkel 30 über und weisen als Führungsnuten ausgebildete Führungen 38 auf, in denen die Steuervorrichtung 28 über entsprechende Führungsnasen oder -stege in Ansteckrichtung führbar ist. Gleichzeitig dienen die Führungen 38 zum Halten der Steuervorrichtung 28 an dem Rahmen 18. Die Steuervorrichtung 28 erstreckt sich bevorzugt im wesentlichen über die volle Länge der Seite 26.

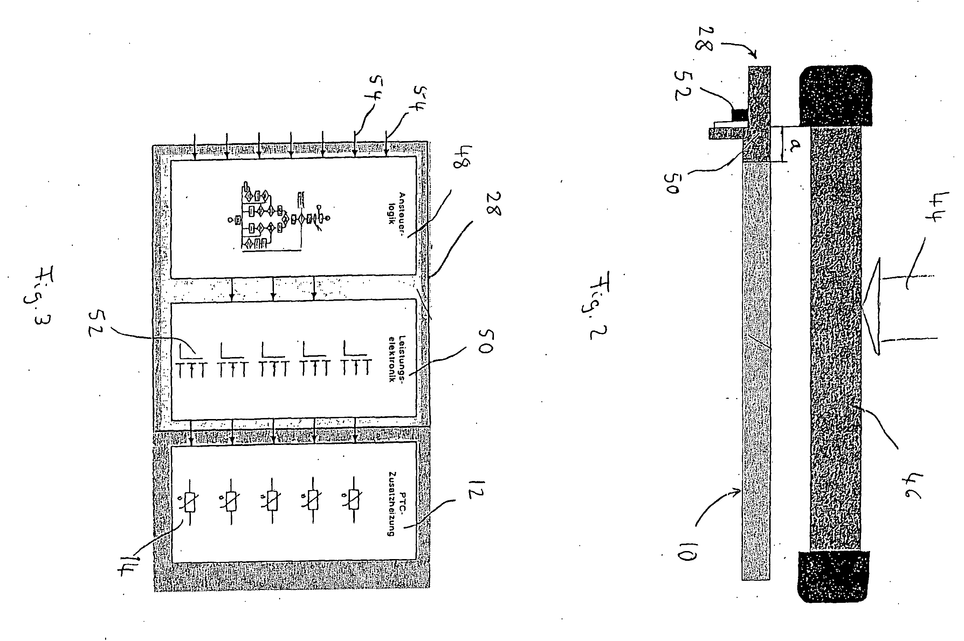

Die Steuervorrichtung 28 weist elektronische Komponenten, beispielsweise elektronische Schalter wie Leistungstransistoren 52 oder dgl., zum Ein- und Ausschalten der einzelnen Heizelemente 14, auf. In der Darstellung der **Fig. 1** sind Halteklammern 40 für die Leistungstransistoren zu erkennen. Die leistungsstarke elektronischen Komponenten, wie die Leistungstransistoren, sind zur Kühlung mit Kühlkörpern 42 verbunden. Die Kühlkörper 42 sind bevorzugt in unmittelbarer Nähe des vorderen Rahmenschenkels 30 angeordnet, so daß die Kühlkörper 42 von dem zu erwärmenden Luftstrom, der durch einen Pfeil 44 (**Fig. 2**) gekennzeichnet ist, beaufschlagt werden. Dazu ist die Heizeinrichtung 10, die beispielsweise in Strömungsrichtung 44 gesehen einem Wärmetauscher 46 nachgeschaltet ist, derart angeordnet, daß die Steuervorrichtung 28 mit dem vorderen Rahmenschenkel 30 bis zu einem Abstand a in den Luftstrom seitlich hineinragt (Fig. 2). Dadurch wird der zu erwärmende Luftstrom 44 gleichzeitig zum Kühlen der elektronischen Komponenten genutzt und durch die Abwärme der elektronischen Komponenten zusätzlich erwärmt.

Wie in **Fig. 3** schematisch dargestellt, weist die Steuervorrichtung 28 eine Ansteuerlogik 48 und eine Leistungselektronik 50 auf. Über die einzelnen elektronischen Schalter 52, die von den Kühlkörpern 42 gekühlt werden, sind die Heizelemente 14 oder Heizelementgruppen separat schaltbar. Bevorzugt ist jedem Heizelement 14 oder Heizelementgruppe ein elektronischer Schalter, beispielsweise ein Leistungstransistor 52, zugeordnet. Die Ansteuerlogik 48, die den Algorithmus zur Ansteuerung der einzelnen Heizelemente 14 oder Heizelementgruppen beinhaltet, kann in die Steuervorrichtung 28 integriert sein, so daß Ansteuerlogik 48 und die Leistungselektronik 50 eine Einheit bilden können. Alle für die Steuerung der Heizleistung benötigten Signaleingänge 54 können dabei über eine serielle Schnittstelle oder ein Datenbussystem, beispielsweise CAN, zugeführt werden.

Damit ist eine kompakte elektrische Heizeinrichtung geschaffen, die neben Stromversorgungsleitungen lediglich noch einen Busanschluß besitzt. Die entsprechenden elektrischen Zuleitungen sind in **Fig. 1** bei 56, 58 und 60 dargestellt. Bevorzugt ist die Versorgungsleitung für die Heizelemente 14 in einem der überstehenden Rahmenschenkel 34 oder 36 angeordnet. Der Datenbusanschluß 60 wird unmittelbar der Steuervorrichtung 28 zugeführt.

Durch die Einzelansteuerung der Heizelemente 14 oder Heizelementgruppen kann auf einfache Weise durch Zu- oder Abschalten einzelner Heizelemente 14 oder Heizelementgruppen die Heizleistung bedarfsgerecht angepaßt werden. Durch das dadurch bedingte Schalten kleinerer Stromstufen ergeben sich geringere Spannungseinbrüche bzw. Spannungs-Überschwinger beim Ein- bzw. Ausschalten einzelner Heizelemente, wodurch auch die Bordnetzbelastung vergleichmäßigt wird. Dadurch ergeben sich geringere Drehmomentänderungen am Generator und eine Entlastung der Motorleerlauf-Drehzahlenregelung. Durch die kleinere Leistungsabstufung kann die eingeschaltete Heizleistung besser an die maximal zur Verfügung stehende Leistung des Generators angepaßt werden. Desweiteren kann über die einzeln ansteuerbaren Heizelemente 14 eine Temperaturverteilung über die Fläche des Heizblocks 12 erreicht werden, bzw. eine ungleichmäßige Temperaturverteilung vergleichmäßigt werden. Defekte Heizelemente können abgeschaltet werden, so daß die elektrische Heizeinrichtung 10 bei einem Defekt nicht sofort ausgetauscht werden muß.

## Patentansprüche

1. Elektrische Heizeinrichtung, insbesondere für ein Kraftfahrzeug, mit mehreren zu einem Heizblock (12) zusammengesetzten Heizelementen (14), wobei der Heizblock (12) in einem Rahmen (18) gehalten ist und der zu erwärmende Luftstrom die Heizeinrichtung durchströmt und mit einer Steuervorrichtung (28) zur Ansteuerung der Heizelemente (14), wobei die Steuervorrichtung (28) mit dem in dem Rahmen (18) gehaltenen Heizblock (12) eine bauliche Einheit bildet, wobei die Steuervorrichtung seitlich an dem Rahmen angeordnet ist.

2. Heizeinrichtung nach Anspruch 1, **dadurch gekennzeichnet, daß** der Heizblock aus einzelnen Heizelementen und zwischen den Heizelementen angeordneten Wellrippen (16) gebildet ist.

3. Heizeinrichtung nach Anspruch 1 oder 2, **dadurch gekennzeichnet, daß** die Steuervorrichtung (28) als Steckmodul ausgebildet ist und im wesentlichen unmittelbar an den in dem Rahmen (18) gehaltenen Heizblock (12) über elektrische Anschlüsse zur Bildung der baulichen Einheit ansteckbar ist.

4. Heizeinrichtung nach einem der Ansprüche 1 bis 3, **dadurch gekennzeichnet, daß** die Steuervorrichtung (28) Kühlkörper (42) elektronischer Komponenten (52) der Steuervorrichtung (28) aufweist, wobei die Kühlkörper (42) derart angeordnet sind, das sie von dem zu erwärmenden Luftstrom (44) beaufschlagbar sind.

5. Heizeinrichtung nach einem der vorhergehenden Ansprüche, **dadurch gekennzeichnet, daß** der Rahmen (18) aus Kunststoff besteht.

6. Heizeinrichtung nach einem der Ansprüche 1 bis 5, **dadurch gekennzeichnet, daß** der Rahmen (18) Führungen (38) aufweist, in denen die Steuervorrichtung (28) zum Ein- und Ausbau führbar ist.

7. Heizeinrichtung nach einem der Ansprüche 1 bis 4 und 6 rückbezogen auf 1 bis 4, **dadurch gekennzeichnet, daß** der Rahmen (18) aus Metall besteht und die Steuervorrichtung (28) in dem Rahmen (18) integriert ist.

8. Heizeinrichtung nach einem der vorhergehenden Ansprüche, **dadurch gekennzeichnet, daß** die Steuervorrichtung (28) eine Ansteuerlogik (48) und eine Leistungselektronik (50) enthält.

9. Heizeinrichtung nach Anspruch 8, **dadurch gekennzeichnet, daß** Ruheströme der Leistungselektronik (50) kleiner etwa 1 mA sind.

10. Heizeinrichtung nach Anspruch 8 oder 9, **dadurch gekennzeichnet, daß** die Steuervorrichtung (28) an ein Datenbussystem oder eine serielle Schnittstelle anschließbar ist.

11. Heizeinrichtung nach Anspruch 10, **dadurch gekennzeichnet, daß** über die Steuervorrichtung (28) die elektrischen Heizelemente (14) und/oder die Steuervorrichtung (28) selbst überwachbar sind und die Überwachungsdaten über das Datenbussystem oder die serielle Schnittstelle zur Verfügung stehen.

12. Heizeinrichtung nach einem der vorhergehenden Ansprüche, **dadurch gekennzeichnet, daß** über die Steuervorrichtung (28) die elektrischen Heizelemente (14) und/oder die Steuervorrichtung (28) selbst vor elektrischer und/oder thermischer Überlastung geschützt sind.

13. Heizeinrichtung nach einem der vorhergehenden Ansprüche, **dadurch gekennzeichnet, daß** elektronische und/oder elektromechanische Bauelemente (z.B. 42, 52) der Steuervorrichtung (28) zumindest teilweise in eine dauerelastische Vergußmasse eingegossen sind.

## Claims

1. Electric heating device, in particular for a motor vehicle,
with a plurality of heating elements composed to a heater block (12), whereas the heater block (12) is held in a frame (18) and the air stream which is to be warmed passes through the heating device and
with a control device (28) for controlling the heating elements (14), whereas
the control device (28) forms a structural unit with the heater block (12) which is held in the frame (18), whereas the control device is located at the side of the frame.

2. Heating device according to claim 1, **characterized in that** the heater block is composed of single heating elements and corrugated ribs (16) which are arranged between the heating elements.

3. Heating device according to claim 1 or 2, **characterized in that** the control device (28) is arranged in form of a cartridge and is substantially direct connectable to the heater block (12) which is held in the frame (18) via electric connectors for building a structural unit.

4. Heating device according to one of claims 1 to 3, **characterized in that** the control device (28) comprises cooling elements (42) of electronic components (52) of the control device (28), whereas the cooling elements (42) are arranged in such a manner, that they are chargeable of the air stream to be warmed (44).

5. Heating device according to one of the previous claims, **characterized in that** the frame (18) is made of plastics.

6. Heating device according to one of claims 1 to 5, **characterized in that** the frame (18) comprises tracks (38), in which the control device (28) is tractable for assembly and disassembly.

7. Heating device according to one of claims 1 to 4 and claim 6 according to claims 1 to 4, **characterized in that** the frame (18) is made of metal and the control device (28) is integrated into the frame (18).

8. Heating device according to one of the previous claims, **characterized in that** the control device (28) comprises a control logic (48) and power electronics (50).

9. Heating device according to claim 8, **characterized in that** the standby currents of the power electronics (50) are less than about 1 mA.

10. Heating device according to claim 8 or 9, **characterized in that** the control device (28) is connectable to a data bus system or to a serial interface.

11. Heating device according to claim 10, **characterized in that** the electric heating elements (14) and/ or the control device (28) itself can be monitored by means of the control device (28) and the monitoring data is available via the data bus system or the serial interface.

12. Heating device according to one of the previous claims, **characterized in that** the electric heating elements (14) and/ or the control device (28) itself are protected against electric and/ or thermal overload by means of the control device (28).

13. Heating device according to one of the previous claims, **characterized in that** electronic and/ or electro-mechanic components (e.g. 42, 52) of the control device (28) are at least partially cast in a permanently elastic joint compound.

## Revendications

1. Dispositif de chauffage électrique, en particulier pour un véhicule, comprenant plusieurs éléments de chauffage (14) assemblés en un bloc de chauffage (12), le bloc de chauffage (12) étant maintenu dans un cadre (18) et le flux à réchauffer traversant le dispositif de chauffage et un dispositif de commande (28) pour l'activation des éléments de chauffage (14), le dispositif de commande (28) formant une unité de construction avec le bloc de chauffage (12) maintenu dans le cadre (18), le dispositif de commande étant disposé sur le côté du cadre.

2. Dispositif de chauffage selon la revendication 1, **caractérisé en ce que** le bloc de chauffage est formé d'éléments de chauffage individuels et de nervures ondulées (16) disposées entre les éléments de chauffage.

3. Dispositif de chauffage selon la revendication 1 ou 2, **caractérisé en ce que** le dispositif de commande (28) est conçu comme module d'enfichage et peut être fixé par fiche sensiblement directement sur le bloc de chauffage (12) et maintenu dans le cadre (18) au moyen de branchements électriques pour la formation de l'unité de construction.

4. Dispositif de chauffage selon l'une quelconque des revendications 1 à 3, **caractérisé en ce que** le dispositif de commande (28) présente des corps de refroidissement (42) de composants (52) électroniques du dispositif de commande (28), les corps de refroidissement (42) étant disposés de telle sorte qu'ils peuvent être alimentés par le flux d'air (44) à réchauffer.

5. Dispositif de chauffage selon l'une quelconque des revendications précédentes, **caractérisé en ce que** le cadre (18) est en plastique.

6. Dispositif de chauffage selon l'une quelconque des revendications 1 à 5, **caractérisé en ce que** le cadre (18) présente des guides (38), dans lesquels le dispositif de commande (28) peut être guidé pour le montage et le démontage.

7. Dispositif de chauffage selon l'une quelconque des revendications 1 à 4 et 6 rapportées à 1 jusqu'à 4, **caractérisé en ce que** le cadre (18) est en métal et le dispositif de commande (28) est intégré dans le cadre (18).

8. Dispositif de chauffage selon l'une quelconque des revendications précédentes, **caractérisé en ce que** le dispositif de commande (28) contient une logique d'activation (48) et une électronique de puissance (50).

9. Dispositif de chauffage selon la revendication 8, **caractérisé en ce que** des courants de repos de l'électronique de puissance (50) sont inférieurs à environ 1 mA.

10. Dispositif de chauffage selon la revendication 8 ou 9, **caractérisé en ce que** le dispositif de commande (28) peut être raccordé à un système de bus de données ou à une interface série.

11. Dispositif de chauffage selon la revendication 10, **caractérisé en ce que** les éléments de chauffage (14) électriques et/ou le dispositif de commande (28) même peuvent être contrôlés par le dispositif de commande (28) et les données de contrôle concernant le système de bus de données ou l'interface série sont mises à disposition.

12. Dispositif de chauffage selon l'une quelconque des revendications précédentes, **caractérisé en ce que** les éléments de chauffage (14) électriques et/ou le dispositif de commande (28) même sont protégés d'une surcharge électrique et/ou thermique par le dispositif de commande (28).

13. Dispositif de chauffage selon l'une quelconque des revendications précédentes, **caractérisé en ce que** des composants (par exemple 42, 52) électriques et/ou électroniques du dispositif de commande (28) sont coulés au moins partiellement dans une masse de scellement à élasticité permanente.
